(19) Europäisches Patentamt

European Patent Office

Office européen des brevets

(11) **EP 1 251 066 B1**

(12) **EUROPÄISCHE PATENTSCHRIFT**

(45) Veröffentlichungstag und Bekanntmachung des Hinweises auf die Patenterteilung:
**11.01.2006 Patentblatt 2006/02**

(51) Int Cl.:
*B64C 1/00* (2006.01)          *B64G 1/64* (2006.01)

(21) Anmeldenummer: **02002320.6**

(22) Anmeldetag: **31.01.2002**

(54) **Ring für die Verbindung zweier rotationssymmetrischer Strukturteile**

Ring for the connection of two structural elements with rotational symmetry

Bague pour la connexion de deux éléments structuraux ayant une symétrie de rotation

(84) Benannte Vertragsstaaten:
**AT BE CH CY DE DK ES FI FR GB GR IE IT LI LU MC NL PT SE TR**

(30) Priorität: **13.03.2001 DE 10111896**

(43) Veröffentlichungstag der Anmeldung:
**23.10.2002 Patentblatt 2002/43**

(73) Patentinhaber: **EADS Space Transportation GmbH 28199 Bremen (DE)**

(72) Erfinder: **Pritzer, Wolfgang 88718 Daisendorf (DE)**

(74) Vertreter: **Poulin, Gérard BREVALEX 3, rue du Docteur Lancereaux 75008 Paris (FR)**

(56) Entgegenhaltungen:
**GB-A- 2 196 922          US-A- 3 116 547**

**Beschreibung**

Die Erfindung betrifft einen Ring für die Verbindung zweier rotationssymmetrischer Strukturteile zu einer rotationssymmetrischen Leichtbaustruktur.

Strukturteile von Raumfahrttransportsystemen werden üblicherweise durch Aluminium-Ringe verbunden. Die Ringe weisen meist ein Schraubinterface oder ein pyrotechnisch trennbares Interface zu den anschließenden Strukturteilen auf. Diese Ringe werden insbesondere benutzt, um konische mit zylindrischen Strukturen zu verbinden. Am Übergang der konischen zur zylindrischen Struktur müssen die axialen Lasten umgelenkt werden. Diese Umlenkung erzeugt hohe radiale Kräfte und Verformungen in Abhängigkeit vom Konuswinkel. Abgesehen von der Belastung nimmt daher auch die Steifigkeit in axialer und radialer Richtung gravierend ab. Für große Raumfahrttransportsysteme, die auf dieser Art von Struktur aufbauen, z.B. die europäische Trägerrakete Ariane 5, ist es ein Problem, die Anforderungen an die Steifigkeit verbunden mit geringstem Eigengewicht zu erfüllen.

In der **US 3,116,547** ist ein Verfahren zur Befestigung eines rotationssymmetrischen keramischen Radoms an einem zylindrischen, metallischen Raketenkörper beschrieben, so dass sich eine rotationssymmetrische Gesamtstruktur ergibt. Am Übergang der beiden zu verbindenden Strukturteile ergibt sich eine Änderung der Steigung der Meridianlinie der Gesamtstruktur. Die Befestigung erfolgt mittels eines umlaufenden, mit Glasfasern verstärkten Kunststoffrings. Der Kunststoffring enthält alternierend Schichten aus tangential und radial gewickelten Glasfasern.

Die **GB 2 196 922 A** offenbart einen glasfaserverstärkten Kunststoffring zur Verbindung zweier gleicher, rohrförmiger Strukturteile zu einer ebenfalls rohrförmigen Leichtbaustruktur.

Der Erfindung liegt die Aufgabe zugrunde, ein Design zu entwickeln, mit dem bei rotationssymmetrischen Leichtbaustrukturen die geforderten Steifigkeiten und Festigkeiten bei geringstem Gewicht erfüllt werden können.

Diese Aufgabe wird durch den Gegenstand des Patentanspruchs 1 gelöst. Vorteilhafte Ausbildungen der Erfindung sind Gegenstand weiterer Ansprüche.

Der erfindungsgemäße Ring für die Verbindung zweier rotationssymmetrischer Strukturteile zu einer rotationssymmetrischen Leichtbaustruktur weist ein umlaufendes CFK-Gelege mit in Umfangsrichtung orientierten Kohlefasern auf.

Mit dem erfindungsgemäßen Ring können die hohen Radialkräfte, die am Übergangsbereich zwischen den beiden Strukturteilen aufgrund der Änderung der Steigung der Meridianlinie der Leichtbaustruktur vorhanden sind, aufgefangen werden.

Die Erfindung umfasst insbesondere zwei grundlegende Ausführungsforman:

1. Verstärkung metallischer Ringe (im folgenden auch Basisring genannt) durch CFK-Gelege.
2. Reines CFK-Gelege ohne metallischen Ring.

Vorteile der Erfindung:

- geringes Gewicht;
- geringer Volumenbedarf;
- einfache Anpassung der Steifigkeit der Gesamtstruktur an die jeweiligen Anforderungen, auch in einem sehr späten Stadium eines Projekts.

Die Erfindung wird anhand von konkreten Ausführungsbeispielen unter Bezugnahme auf Figuren näher erläutert. Es zeigen:

Fig. 1    einen erfindungsgemäßen Ring aus einem metallischen Basisring 10 mit CFK-Versteifung 20 beim Übergang von einem konusförmigen Strukturteil 1 zu einem zylindrischen Strukturteil 2;

Fig. 2    eine weitere Ausführung eines erfindungsgemäßen Rings aus einem metallischen Basisring 12 mit CFK-Versteifung 22 beim Übergang von einem konusförmigen Strukturteil 3 zu einem nicht eingezeichneten zylinderförmigen Nutzlastadapter;

Fig. 3    eine weitere Ausführung eines erfindungsgemäßen Rings aus einem CFK-Gelege ohne metallischen Ring beim Übergang von einem konusförmigen Strukturteil 4 zu einem zylindrischen Strukturteil 5.

**Verstärkung metallischer Ringe durch CFK-Gelege**

Zur Verbindung mit weiteren Strukturteilen 2 wird der obere und untere Kreis eines konischen Strukturteils 1,3 üblicherweise von einem metallischem Ring 10,12 gebildet. Der Ring kann außerdem das Interface zu einer weiteren Anschlussstruktur, meist einem Flansch 7 mit einer Lochreihe für eine Schraubverbindung, aufweisen.

Da es sich bei den zu verbindenden Strukturteilen 1,2,3 um Leichtbau-Strukturen handelt, sind diese als Sandwichstrukturen mit Waben als Kern und Deckschichten aus CFK aufgebaut. Aus der Geometrie eines relativ dicken Querschnitts eines Sandwichs und der Forderung nach einem leichten Verbindungsring ergibt sich, dass die Ringe 10,12 im Querschnitt meist U-förmige Bereiche zum Anschluss (mittels Schraubnieten 40 oder mittels Kleben) an die Deckschichten der Strukturteile 1,2,3 haben. Die Verbindung der Sandwichstruktur mit dem Ring erfolgt vornehmlich über Laschen 41.

Um unter diesen Bedingungen die Forderung nach einer hohen Umfangssteifigkeit bei gleichzeitig niedrigem Gewicht erfüllen zu können, wird erfindungsgemäß vorgeschlagen, statt einer Aufdickung des Aluminium-Ringes (bei Ariane 5 wird ein Ringdurchmesser von 5,40 m benötigt), den vorhandenen U-förmigen Raum des metallischen Ringes zu nutzen, um ein spezifisch leichtes, unidirektionales CFK-Gelege 20 hier einzubringen. Die Kohlefasern verlaufen in Richtung der Umfangslinien der rotationssymmetrischen Leichtbaustruktur. Bevorzugt werden hochmodulige Fasern (Elastizitätsmodul mindestens 300 GPa) eingesetzt.

Die Überlegenheit des CFK-Geleges gegenüber einer Aluminiumlegierung kommt am besten bei einem Vergleich der dabei wichtigsten Werkstoffkennzahlen zum Ausdruck. Für das unidirektionate Gelege wird eine raumfahrttypische hochmodulige Faser, z.B. M55JB-6K-50B und das Harzsystem Rütapox L20/SL, verwendet und für das Aluminium, die bei Ariane 5 eingesetzte Aluminiumlegierung 3.4364 T7351.

Vergleicht man beide Werkstoffe bezüglich ihres Gewichtes unter dem Gesichtspunkt gleicher Gesamtsteifigkeit (E * A) mit E: Elastizitätsmodul und A: Querschnittsfläche des CFK-Ringes, so erhält man mit den im Beispiel benutzten Werkstoffen folgendes Ergebnis:

| Werkstoff | Aluminium-Legierung | CFK |
|---|---|---|
| E-Modul [N/mm$^2$] | 70 000 | 310000 |
| Spez. Masse [kg/m$^3$] | 2 800 | 1587 |

$$(E \cdot A)_{ALU} = (E \cdot A)_{CFK}$$

$$\frac{A_{ALU}}{A_{CFK}} = \frac{E_{CFK}}{E_{ALU}}$$

$$\frac{G_{ALU}}{G_{CFK}} = \frac{A_{ALU} \cdot L \cdot \rho_{AL}}{A_{CFK} \cdot L \cdot \rho_{CFK}}$$

$$\frac{G_{ALU}}{G_{CFK}} = \frac{E_{CFK}}{E_{ALU}} \cdot \frac{\rho_{AL}}{\rho_{CFK}} = \frac{310\,000\,N/mm^2}{70\,000\,N/mm^2} \cdot \frac{2800\,kg/m^3}{1587\,kg/m^3} = 7,81[--]$$

Das heißt, das Gewicht des vergleichbaren Aluminium-Designs wäre bei gleicher Gesamtsteifigkeit (E*A) 7,8 mal schwerer als die Ausführung mit CFK-Versteifung, oder anders ausgedrückt, man benötigt nur 12,8 % des Gewichts der Aluminiumausführung, wenn man den Ring mit CFK verstärkt.

Die CFK-Versteifung 20 besteht aus Nassrovings oder vorimpregnierten Rovings, die in den Basisring 10,12 vor der Integration in die Anschlussstrukturen eingebracht werden. Der Aluminiumring 10,12 bildet hierbei das Gehäuse oder das Formteil für die CFK- Verstärkung 20. Dies kann auf einer Wickelmaschine oder einem Drehtisch erfolgen, oder mit weniger Vorrichtungen können die Rovings von Hand als vorimprägnierte Rovings oder nass eingelegt werden. Anschließend kann noch eine Wärmebehandlung erfolgen, je nach den äußeren Umweltbedingungen, die das Bauteil während seines Einsatzes erfährt.

Um eine bestimmte Steifigkeit zu erreichen, muss man eine entsprechende Fasermenge einbringen, wobei der Harzanteil nicht von großer Bedeutung ist. Angestrebt wird ein Faservolumen von 50 % - 60 %. Die mit der Menge der Fasern vorgegebene Gesamtsteifigkeit (E*A) ändert sich nicht, nur das Gewicht nimmt zu, wenn mehr Harz verwendet wird oder umgekehrt. Ein höherer Harzanteil ist insoweit von Vorteil, als damit eine Vereinfachung des Fertigungsprozesses verbunden ist. Die CFK-Rovings können je nach Ausführung der Aluminiumprofile von jeder Seite (von innen, außen, oben, unten, schräg) eingebracht werden.

**CFK-Gelege ohne metallischen Basisring**

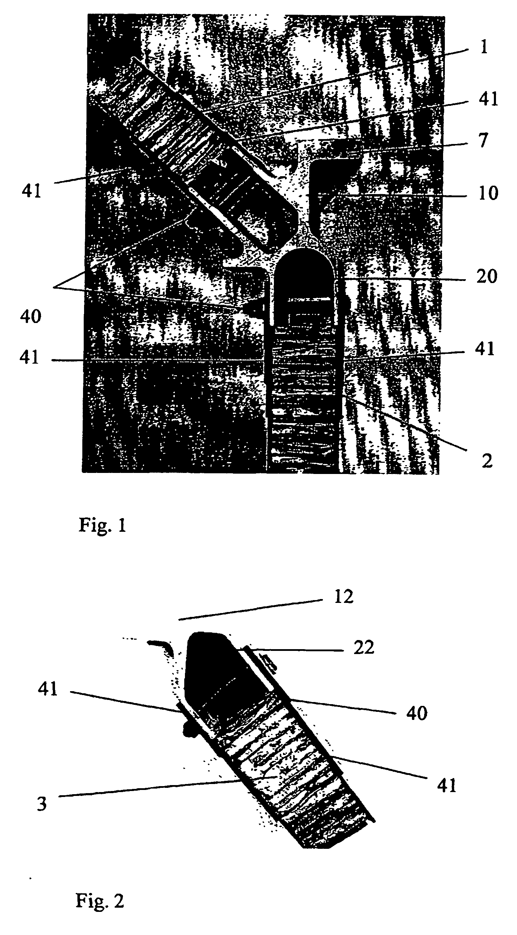

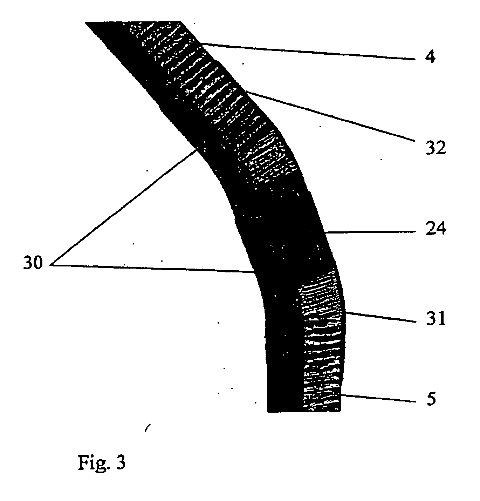

Wenn die Strukturen an dem Übergang Konus/Zylinder kein Interface (Flansch 7 der Fig. 1) zu einer anderen Struktur haben müssen, kann man ganz auf einen metallischen Anschlussring verzichten. Stattdessen ersetzt man diesen Ring durch einen CFK-Ring 24, der wie oben beschrieben, aus unidirektionalen Kohlefasern besteht und in einer entsprechenden Laminierform hergestellt wird, in derselben Weise wie oben beschrieben. Diese Ausführung zeigt Fig. 3. Der CFK-Ring 24 wird dann direkt mit den Sandwiches des zylindrischen Strukturteils 5 und des konusförmigen Strukturteils 4 durch umlaufende Laschen 30,31,32 (vorwiegend geklebt) auf der Außen- und Innenseite verbunden. Die Laschen übernehmen die Aufgabe, die hohen Kräfte der Sandwich-Deckschichten zwischen der Konus-Struktur und der Zylinder-Struktur zu übertragen. Auch in dieser Ausführung kann man vorteilhaft hochmodulige Fasern mit einem Elastizitätsmodul größer 300 GPa einsetzen.

**Definitionen:**

| CFK: | Kohlefaserverstärkter Kunststoff Englisch: Carbon Fibre Reinforced Plastic (CFRP) |
|---|---|
| Design: | Entwurf, Bauweise, Dimensionierung |
| Interface: | Mechanische Verbindung zwischen zwei Strukturen. |
| Roving: | Faserstrang bestehend aus vielen tausend parallelen Einzelfasern. |
| Faservolumen: | Volumenmäßiger Anteil von Fasern in einem Gemisch aus Fasern und Harz. |
| Sandwich: | Leichte, beulsteife Platte bestehend aus dünnen Deckschichten (z.B. Aluminium, CFK) und einem dicken Kernmaterial (z.B. Aluminiumwabe, Schaum). |
| Meridianlinie: | Schnittlinie der rotationssymmtrischen Leichtbaustruktur mit einer Ebene, in der die Rotationsachse liegt. |
| Umfangslinie: | . Schnittlinie der rotationssymmtrischen Leichtbaustruktur mit einer Ebene, die senkrecht zur Rotationsachse liegt. |

**Patentansprüche**

1. Ring für die Verbindung zweier rotationssymmetrischer Strukturteile (1-5) zu einer rotationssymmetrischen Leichtbaustruktur, wobei am Übergang zwischen den beiden Strukturteilen (1-5) eine Änderung der Steigung der Meridianlinie der Leichtbaustruktur vorhanden ist, **dadurch gekennzeichnet, dass** der Ring ein umlaufendes CFK-Gelege (20,22,24) mit ausschließlich in Umfangsrichtung orientierten Kohlefasern enthält.

2. Ring nach Anspruch 1, **dadurch gekennzeichnet, dass** er einen metallischen Basisring (10,12) umfasst, in dessen Querschnitt das umlaufende CFK-Gelege (20,22) eingebettet ist.

3. Ring nach Anspruch 2, **dadurch gekennzeichnet, dass** der metallische Basisring (20,22) im Querschnitt eine in Richtung auf die Strukturteile offene Einbuchtung aufweist, wobei das umlaufende CFK-Gelege (20,22) in diese Einbuchtung eingebettet ist.

4. Ring nach Anspruch 1, **dadurch gekennzeichnet, dass** er ausschließlich aus dem umlaufenden CFK-Gelege (24) ohne metallischen Basisring besteht.

5. Ring nach Anspruch 4, **dadurch gekennzeichnet, dass** das CFK-Gelege (24) mittels CFK-Laschen (30-32) mit den Strukturteilen (4,5) verbunden ist.

6. Verbindung zweier Strukturteile mit einem Ring nach einem der vorangehenden Ansprüche, **dadurch gekennzeichnet, dass** die Strukturteile (1-5) aus einem Sandwichmaterial bestehen.

**EP 1 251 066 B1**

**Claims**

1. Ring for the connection of two structural elements (1-5) with rotational symmetry to form a lightweight structure with rotational symmetry, a change of the slope of the meridian line of the lightweight structure occurring at the transition between the two structural elements (1-5), **characterized in that** the ring comprises a surrounding CFRP fabric (20, 22, 24) with carbon fibres oriented exclusively in the circumferential direction.

2. Ring according to Claim 1, **characterized in that** it comprises a metallic base ring (10, 12), in the cross section of which the surrounding CFRP fabric (20, 22) is embedded.

3. Ring according to Claim 2, **characterized in that** the metallic base ring (20, 22) has in cross section an indentation which is open in the direction of the structural elements, the surrounding CFRP fabric (20, 22) being embedded in this indentation.

4. Ring according to Claim 1, **characterized in that** it exclusively comprises the surrounding CFRP fabric (24) without a metallic base ring.

5. Ring according to Claim 4, **characterized in that** the CFRP fabric (24) is connected to the structural elements (4, 5) by means of CFRP butt straps (30, 32).

6. Connection of two structural elements with a ring according to one of the preceding claims, **characterized in that** the structural elements (1-5) consist of a sandwich material.


**Revendications**

1. Bague pour la liaison de deux éléments structuraux (1-5) symétriques en rotation pour une structure de construction allégée symétrique en rotation, une modification de la pente de la ligne méridienne de la structure de construction allégée étant présente à la transition entre les deux éléments structuraux (1-5), **caractérisée en ce que** la bague contient une garniture en composite renforcé de fibres de carbone (20, 22, 24) circulaire avec des fibres de carbone orientées uniquement dans le sens tangentiel.

2. Bague selon la revendication 1, **caractérisée en ce qu'**elle comprend une bague de base (10, 12) métallique, dans la section de laquelle est intégrée la garniture en composite renforcé de fibres de carbone (20, 22) tangentielles.

3. Bague selon la revendication 2, **caractérisée en ce que** la bague de base (20, 22) métallique présente en section un creux ouvert en direction des éléments structuraux, la garniture en composite renforcé de fibres de carbone (20, 22) tangentielles étant intégrée dans ce creux.

4. Bague selon la revendication 1, **caractérisée en ce qu'**elle se compose exclusivement de la garniture en composite renforcé de fibres de carbone (24) tangentielles sans bague de base métallique.

5. Bague selon la revendication 4, **caractérisée en ce que** la garniture en composite renforcé de fibres de carbone (24) est reliée au moyen de pattes en composite renforcé de fibres de carbone (30-32) aux éléments structuraux (4, 5).

6. Liaison de deux éléments structuraux avec une bague selon l'une quelconque des revendications précédentes, **caractérisée en ce que** les éléments structuraux (1-5) sont composés d'un matériau sandwich.

Fig. 1

Fig. 2

Fig. 3